# EUROPEAN PATENT SPECIFICATION

(11) **EP 3 779 893 B1**
(45) Date of publication and mention of the grant of the patent: **25.12.2024**
(21) Application number: 19926637.0
(22) Date of filing: 25.12.2019
(51) Int. Cl.: G06T 19/00, G06F 3/01, G06F 3/0346, G06F 3/0484, B23K 37/04

(54) **IMAGE PROCESSING SYSTEM SHOWING JIG ARRANGEMENT**
BILDVERARBEITUNGSSYSTEM ZUR ANZEIGE EINER HALTEANORDNUNG
SYSTÈME DE TRAITEMENT D'IMAGE PRÉSENTANT UN AGENCEMENT DE GABARIT

(30) Priority: 25.04.2019 JP 2019084245
(43) Date of publication of application: 17.02.2021
(73) Proprietor: NTT DOCOMO, INC., Chiyoda-ku Tokyo 100-6150 (JP)
(72) Inventor: YAMASAKI ,Takeo, Tokyo 100-6150 (JP); MIYAMURA, Hajime, Kami-shi, Kochi 782-0047 (JP)
(74) Representative: Viering, Jentschura & Partner mbB Patent- und Rechtsanwälte
(86) International application number: PCT/JP2019/050957
(87) International publication number: WO 2020/217591

(56) References cited:
- EP-A1- 3 358 448
- WO-A1-2011/132506
- DE-A1- 102009 056 013
- JP-A- 2014 215 748
- JP-A- 2017 039 168
- JP-A- 2018 047 240
- JP-A- 2019 208 737
- US-A1- 2016 260 261
- US-A1- 2017 053 557
- ANTONELLI DARIO ET AL: "Enhancing the Quality of Manual Spot Welding through Augmented Reality Assisted Guidance", PROCEDIA CIRP, vol. 33, 2015, NL, pages 556 - 561, XP055816843, ISSN: 2212-8271, DOI: 10.1016/j.procir.2015.06.076

## Description

### Technical Field

The present invention relates to a video display system that displays a video for supporting a user's work.

### Background Art

A technique relating to mixed reality (hereinafter referred to as "MR") is known of displaying virtual information using computer graphics or the like with respect to a real object arranged in a real space (see, for example, Patent Document 1). Patent Document 1 discloses a technique of synthesizing display of a virtual video and a real video obtained by capturing an image of an architectural model that is a real object. Patent Document 2 discloses a solution to perform during-surgery support of surgery with high accuracy and at low cost. Patent Document 3 discloses a solution for placing and rendering of virtual objects in three dimensional environments. Patent Document 4 discloses a method for generating an augmented reality image, wherein a real image of a real environment is recorded by means of a camera. Patent Document 5 discloses a system for providing visual cues to a welder via an augmented reality display for a sequence of operations. Patent Document 6 discloses a welding jig for welding a target plate to a die steel. Patent Document 7 discloses a head mounted display for a welding guided by augmented reality. Non-Patent Document 1 discloses an algorithm for improving manual welding by passing the same information to the human operator as used in the robotic cell.

### Citation List

### Patent Documents

[Patent Document 1] Japanese Unexamined Patent Publication No. 2006-18444
[Patent Document 2] JP 2018 047240 A
[Patent Document 3] EP 3 358 448 A1
[Patent Document 4] DE 10 2009 056013 A1
[Patent Document 5] US 2017/053557 A1
[Patent Document 6] WO 2011/132506 A1
[Patent Document 7] US 2016/260261 A1

### Non-Patent Document

[Non-Patent Document 1] Dario Antonelli et al.: "Enhancing the Quality of Manual Spot Welding through Augmented Reality Assisted Guidance", 9th Conference on Intelligent Computation in Manufacturing Engineering - CIRP, 2015.

### Summary of Invention

### Technical Problem

As a method of using an MR technique, associating a virtual video for supporting a user's work through a head mount display (HMD) (hereinafter referred to as an "MR device") or the like with a real object and providing it to the user can be considered. For example, when welding steel members, work such as reading and understanding of drawings, ruling on steel members, and confirmation of ruling is required. Even skilled engineers take time to understand complicated drawings, and reworking due to simple mistakes is needed when there are many portions to be welded. For this reason, conventional welding of steel members has required skilled techniques. Consequently, superimposition display of a virtual object indicating a mounting member on a real steel member using the MR device can be considered.

However, the difficulty of mounting work may not be improved by only superimposition display of a virtual object indicating a mounting member on a structure such as a steel member. For example, in a state in which a mounting member having relatively large dimensions or weight is inclined with respect to a structure, mounting work such as welding may be performed between the mounting member and the structure. In such a case, it is difficult to perform the mounting work while maintaining a state in which the mounting member is arranged in accordance with display of the virtual object.

The present disclosure was invented in view of the above problems, and an object thereof is to provide a video display system that makes it possible to easily mount a member on a structure.

### Solution to Problem

In order to achieve the above object, according to the present disclosure, there is provided a video display system used in mounting a member on a structure according to claim 1. Additional features for advantageous embodiments of the present invention are provided in the dependent claims.

In the video display system according to the present disclosure, information on the arrangement of a jig for positioning a member on a structure is stored, and a display process indicating the arrangement of the jig is performed on the structure arranged in a real space. A user can easily arrange the jig in accordance with the display process indicating the arrangement of the jig. As a result, the member is positioned by the jig on the structure, and thus it is possible to easily mount the member on the structure.

### Advantageous Effects of Invention

According to the present disclosure, it is possible to provide a video display system that makes it possible to easily mount a member on a structure.

### Brief Description of Drawings

FIG. 1 is a diagram illustrating functions of a video display system according to an embodiment.
FIG. 2 is a diagram illustrating a structure and display which is performed by the video display system.
FIG. 3 is a diagram illustrating an example of a mounting member.
FIG. 4 is a diagram illustrating a state in which the mounting member is mounted using the video display system and a jig.
FIG. 5 is a diagram illustrating an arrangement of the jig in mounting work.
FIG. 6 is a diagram illustrating an arrangement of the jig in mounting work according to a modification example of the present embodiment.
FIG. 7 is a diagram illustrating position shift detection for the jig which is performed by the video display system.
FIG. 8 is a diagram illustrating position shift detection for the jig which is performed by a video display system according to the modification example of the present embodiment.
FIG. 9 is a diagram illustrating display selection which is performed by the video display system.
FIG. 10 is a diagram illustrating display selection which is performed by the video display system.
FIG. 11 is a flow chart illustrating an example of processing which is performed by the video display system.
FIG. 12 is a flow chart illustrating an example of a display process which is performed by a control unit.
FIG. 13 is a diagram illustrating a hardware configuration of the video display system according to an embodiment.

### Description of Embodiments

Hereinafter, an embodiment of a video display system according to the present disclosure will be described in detail with reference to the accompanying drawings. Meanwhile, in the description of the drawings, the same components are denoted by the same reference numerals and signs, and thus description thereof will not be repeated.

### [Outline of video display system]

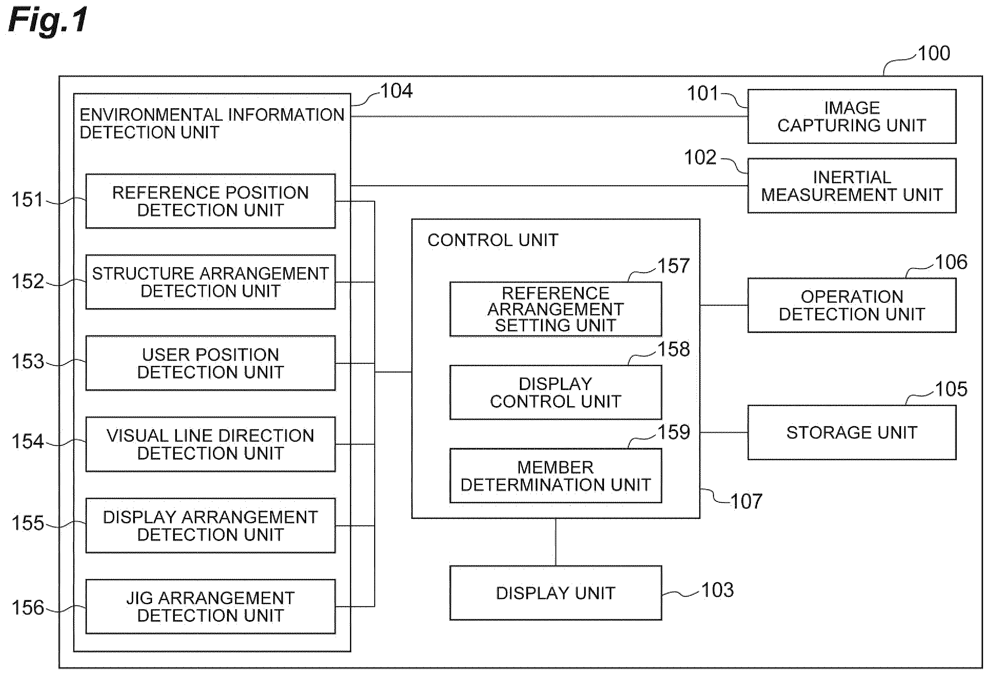

First, a video display system according to the present embodiment will be described. FIG. 1 shows a block diagram of a video display system. A video display system 100 displays a virtual object based on computer graphics (CG) associated with a real space (a world coordinate system). The video display system 100 is realized by, for example, an information processing terminal or the like including an HMD which is worn by a user. The video display system 100 may be a tablet terminal, projection mapping, or the like. Hereinafter, a case in which the video display system 100 is an HMD used in an MR technique will be described as an example. The video display system 100 employs an optical see-through scheme for allowing a user to visually recognize a real object in a real space and a virtual object using a half mirror. The video display system 100 may employ a video see-through scheme for merging a virtual object with video in a real space and allowing a user to visually recognize the result. In the present embodiment, the video display system 100 uses a video see-through scheme.

The video display system 100 performs image capturing in the same image capturing direction as a user's eye line, or the like. The video display system 100 superimposes a virtual object on a captured image to display the result. By viewing this display, a user can view a virtual object that does not exist in reality according to the arrangement of a real object arranged in a real space. The "arrangement" referred to here means the state of six degrees of freedom defined by coordinates on predetermined three-dimensional coordinate axes and rotation around each of the three-dimensional coordinate axes (orientation in three-dimensional coordinates).

The video display system 100 displays a virtual object using a virtual space (a screen coordinate system) which is three-dimensional coordinates. The video display system 100 arranges a virtual object at preset position in a virtual space, and calculates a correspondence relation between the virtual space and the real space. The arrangement of a virtual object in a virtual space is referred to as "display arrangement." In the following description, a coordinate axis indicating the position of a virtual object in a virtual space is referred to as a "virtual coordinate axis α." In the video display system 100, an image viewed from a position and direction in a virtual space corresponding to an image capturing position and image capturing direction in a real space is defined as display of a virtual object. That is, an image of a virtual object in a virtual space viewed from a virtual user's visual line is displayed. The display of a virtual object can be carried out using an MR technique of the related art. The video display system 100 detects a user's movement, and changes a display process in accordance with the movement so as to match a change in the user's visual line according to the user's movement.

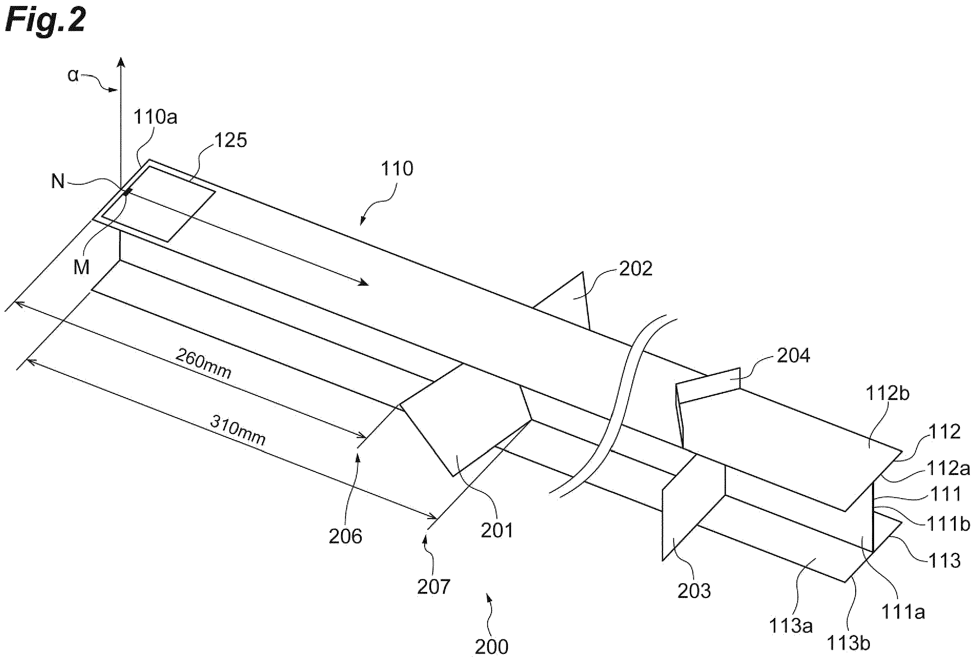

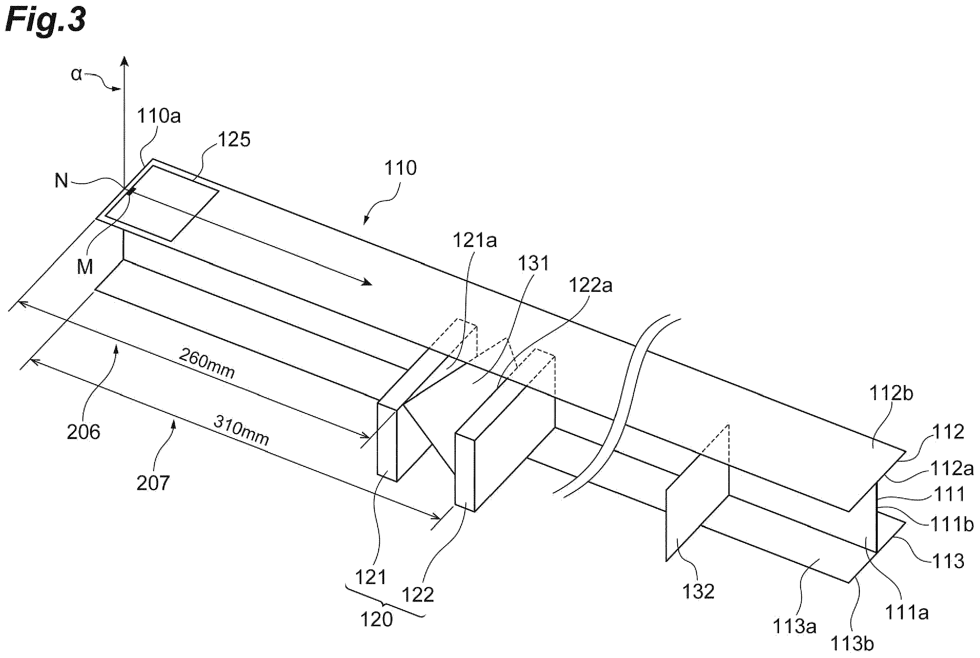

The video display system 100 is used in mounting a member on a structure 110 arranged in a real space (hereinafter referred to as a "mounting member"). FIG. 2 shows display that the video display system 100 allows a user to visually recognize. FIG. 3 shows a state in which mounting members are mounted using the video display system 100. The video display system 100 displays a virtual object indicating the arrangement of a jig 120 on a display to correspond to the arrangement of the structure 110 which is a real object arranged in a real space. In other words, the video display system 100 performs a display process indicating the arrangement of the jig 120 on the structure 110 arranged in a real space. In the present embodiment, the structure 110 is an H steel member having an elongated shape.

The jig 120 is a member for positioning a mounting member on the structure 110. For example, in a state in which a mounting member is positioned on the structure 110 by the jig 120, a user performs mounting work such as welding between the mounting member and the structure. In the present embodiment, the above-described virtual object contains information indicating the structure 110 in a real space, information indicating a mounting member scheduled to be mounted on the structure 110, and information indicating a distance from a reference position to a position at which the jig 120 is arranged. The reference position is an end 110a of the structure 110.

In the present embodiment, as shown in FIG. 2, the video display system 100 displays virtual mounting members 201, 202, 203, and 204 indicating mounting members scheduled to be mounted on the structure 110 and information 206 and 207 indicating distances from the reference position to the position at which the jig 120 is arranged. The video display system 100 performs display allowing a virtual object indicating the arrangement of the jig 120 to be visually recognized by a user in a state in which it overlaps the structure 110 arranged in a real space, and indicates a position at which the jig 120 is to be mounted on the structure 110. The virtual mounting member 201 shown in FIG. 2 corresponds to a mounting member 131. An arrangement in which the virtual mounting member 201 is displayed is an arrangement in which the mounting member 131 is scheduled to be mounted. The virtual mounting member 203 shown in FIG. 2 corresponds to a mounting member 132. An arrangement in which the virtual mounting member 203 is displayed is an arrangement in which the mounting member 132 is scheduled to be mounted.

In the present embodiment, the video display system 100 displays a shortest distance from the end 110a of the structure 110 in its extending direction to a mounting member and a longest distance from the end 110a of the structure 110 in its extending direction to the mounting member as distances from the reference position to the position at which the jig 120 is arranged. As shown in FIGS. 2 and 3, through the video display system 100, it can be understood that the shortest distance from the end 110a of the structure 110 in its extending direction to the mounting member is 260 mm, and that the longest distance from the end 110a of the structure 110 in its extending direction to the mounting member is 310 mm.

The video display system 100 detects the reference position on the basis of a reference marker 125 arranged on the structure 110 in a real space. The reference marker 125 is arranged in a predetermined arrangement relation with the structure 110 before work is performed. In the present embodiment, the reference marker 125 is provided along the end 110a of the structure 110 on a face plate 112 of the structure 110. The reference marker 125 has a feature point that makes it possible for the video display system 100 to recognize the three-dimensional arrangement of the reference marker 125 in a real space through image recognition. For example, the reference marker 125 may contain a diagram having such a feature point (for example, a two-dimensional code) or the like. Insofar as the video display system 100 can recognize the three-dimensional arrangement of the reference marker 125 in a real space, the reference marker 125 is not limited to this form. For example, the feature point of the reference marker 125 may be shown by the color or blinking of the reference marker 125. The three-dimensional position of the reference marker 125 may be identified through a method of identifying a three-dimensional position using a magnetic signal, a sound wave signal, or the like.

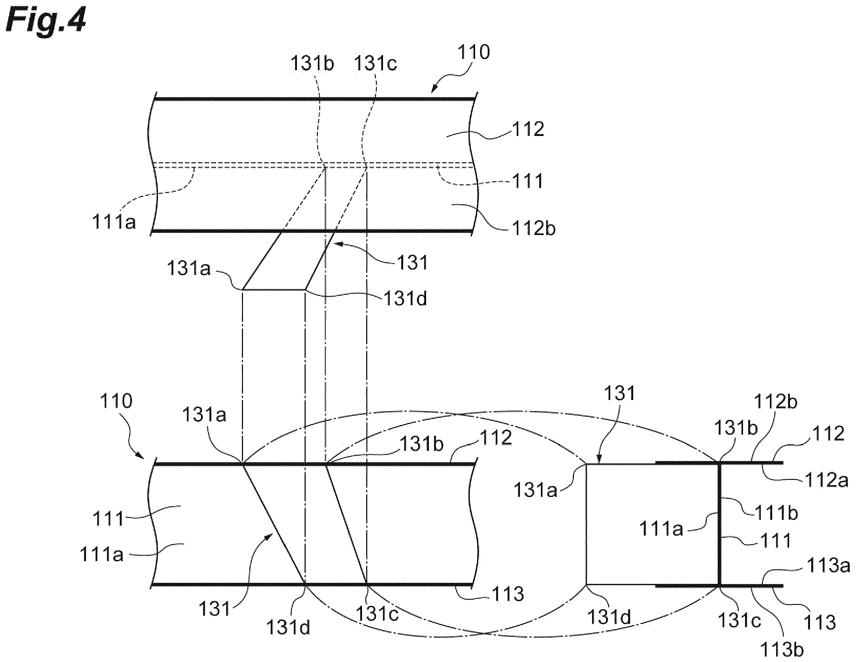

FIG. 4 shows an example a state in which a mounting member is mounted on the structure 110. FIG. 4 shows a three-sided view of a state in which the mounting member is mounted to be inclined with respect to the structure 110. As shown in FIGS. 2 to 4, the structure 110 has a configuration in which three face plates 111, 112, and 113 extending in a longitudinal direction are integrally connected to each other. The face plates 111, 112, and 113 all exhibit a rectangular shape.

The face plate 111 has main surfaces 111a and 111b that face each other. The face plate 112 has main surfaces 112a and 112b that face each other. The face plate 113 has main surfaces 113a and 113b that face each other. The main surfaces 111a, 111b, 112a, 112b, 113a, and 113b of the face plates 111, 112, and 113 extend in a longitudinal direction and are in contact with the mounting member. The face plate 111 is connected to the face plates 112 and 113 so as to be perpendicular thereto. The central portion of the main surface 112a of the face plate 112 and the central portion of the main surface 113a of the face plate 113 are connected to a pair of long sides of the face plate 111.

FIG. 4 shows relationships among an outward appearance when viewed from a direction orthogonal to the main surface 112b of the face plate 112, an outward appearance when viewed from a direction orthogonal to the main surface 111a of the face plate 111, and an outward appearance when viewed from the extending direction of the structure 110, with respect to the structure 110 on which the mounting member 131 is mounted. As shown in FIG. 4, the mounting member 131 is trapezoidal when seen in a plan view, and has four corner portions 131a, 131b, 131c, and 131d. FIG. 4 shows the same corner portions connected by a dashed-dotted line.

As shown in FIG. 4, the mounting member 131 is also inclined with respect to the main surface 112a of the face plate 112 and the main surface 113a of the face plate 113 while being inclined with respect to the main surface 111a of the face plate 111. A side connecting the corner portion 131b and the corner portion 131c is in contact with the main surface 111a of the structure 110. A side connecting the corner portion 131a and the corner portion 131b is in contact with the main surface 112a of the structure 110. A side connecting the corner portion 131c and the corner portion 131d is in contact with the main surface 113a of the structure 110. In this case, in the extending direction of the structure 110, the position of the corner portion 131a is a position of the shortest distance from the end 110a of the structure 110. In the extending direction of the structure 110, the position of the corner portion 131c is a position of the longest distance from the end 110a of the structure 110.

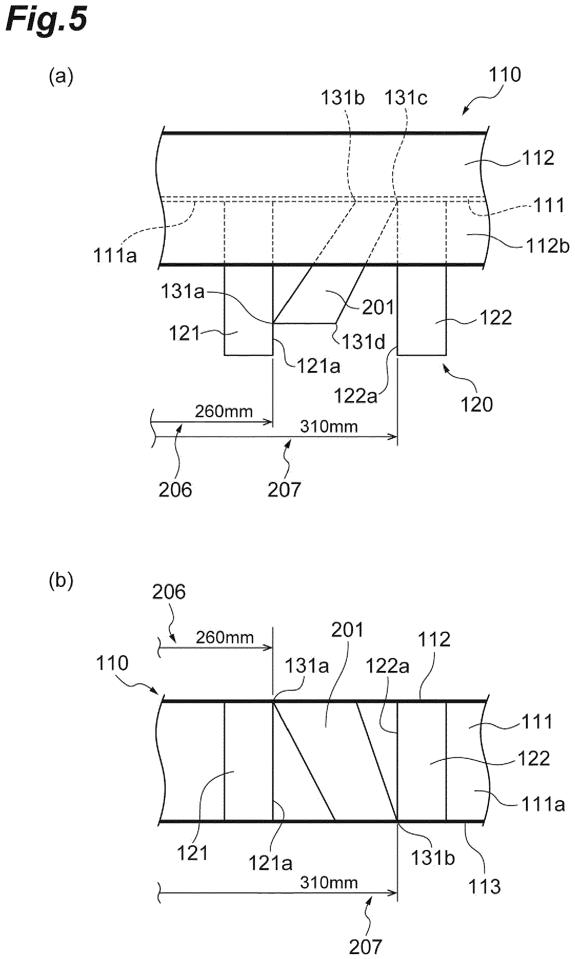

FIG. 5 is a partial enlarged view illustrating an arrangement relation among the structure 110, the jig 120, and display of the video display system 100. Here, (a) of FIG. 5 shows an outward appearance when viewed from a direction orthogonal to the main surface of the face plate 112. In addition, (b) of FIG. 5 shows an outward appearance when viewed from a direction orthogonal to the main surface 111a of the face plate 111. The virtual mounting member 201 has the same shape as the mounting member 131, and has the four corner portions 131a, 131b, 131c, and 131d.

As shown in FIGS. 3 and 5, the jig 120 includes a first jig 121 and a second jig 122. The first jig 121 has a flat surface 121a. The second jig 122 has a flat surface 122a. In the present embodiment, the flat surface 121a of the first jig 121 and the flat surface 122a of the second jig 122 are arranged perpendicularly to the main surface 111a and the main surface 113a. Each of the first jig 121 and the second jig 122 has a rectangular parallelepiped shape. Each of the first jig 121 and the second jig 122 is arranged to be in contact with at least the main surface 111a and the main surface 113a of the structure 110.

On the basis of the display of the video display system 100, the flat surface 121a of the first jig 121 is arranged at the position of the shortest distance from the end 110a in the extending direction of the structure 110 to the mounting member 131. On the basis of the display of the video display system 100, the flat surface 122a of the second jig 122 is arranged at the position of the longest distance from the end 110a in the extending direction of the structure 110 to the mounting member.

The video display system 100 also displays the virtual mounting member 201 in addition to display of the information 206 and 207 indicating distances from the reference position to the position at which the jig 120 is arranged. The first jig 121 is arranged to be in contact with a portion of the virtual mounting member 201 which is located at the shortest distance from the end 110a in the extending direction of the structure 110. The second jig 122 is arranged to be in contact with a portion of the virtual mounting member 201 which is located at the longest distance from the end 110a in the extending direction of the structure 110. In the present embodiment, the first jig 121 is arranged so that the flat surface 121a is in contact with the corner portion 131a of the virtual mounting member 201, and the second jig 122 is arranged so that the flat surface 122a is in contact with the corner portion 131d of the virtual mounting member 201. In this case, the flat surface 121a of the first jig 121 and the flat surface 122a of the second jig 122 face each other. Thereby, the jig 120 is arranged to restrict the position of the mounting member 131 in the extending direction of the structure 110; the angle of inclination of the mounting member 131 with respect to the main surface 111a of the structure 110; and the angle of rotation of the mounting member 131 with respect to an axis orthogonal to the main surface 111a. For example, the mounting member 131 is arranged to abut the main surface 111a of the structure 110; the flat surface 121a of the first jig 121; and the flat surface 122a of the second jig 122, so that the mounting member 131 is positioned with a desired arrangement.

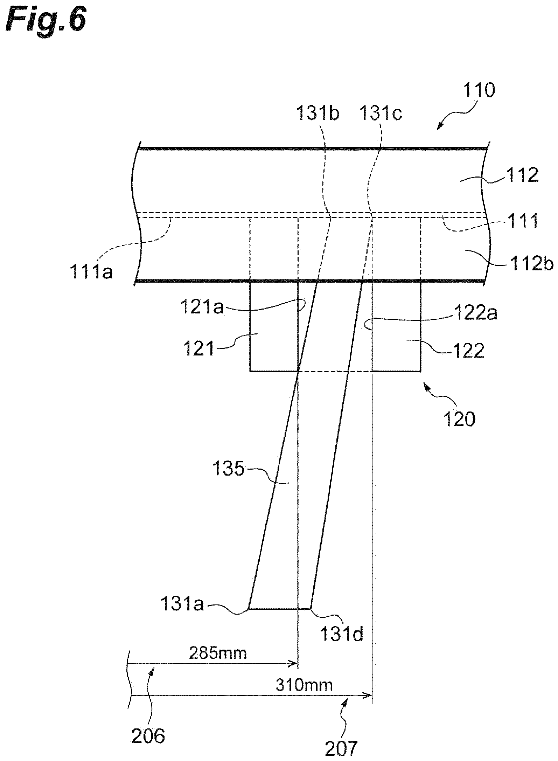

FIG. 6 is a diagram illustrating an arrangement of the jig in mounting work according to a modification example of the present embodiment. In the present modification example, a mounting member 135 having a length in a direction intersecting the main surface 111a of the face plate 111 which is larger than the mounting member 131 is mounted on the structure 110. The mounting member 135 also has the four corner portions 131a, 131b, 131c, and 131d. In the direction intersecting the main surface 111a, the length of the mounting member 135 is larger than the length of the jig 120. In this case, the flat surface 122a is in contact with the corner portion 131d, but the flat surface 121a cannot be in contact with the corner portion 131a. In this case, the first jig 121 is arranged so that the flat surface 121a is in contact with the side connecting the corner portion 131a and the corner portion 131b. The video display system 100 shows a portion of the side connecting the corner portion 131a and the corner portion 131b with which the flat surface 121a of the first jig 121 is in contact. In other words, the video display system 100 displays the position of the shortest distance from the end 110a to the mounting member 135 within a region interposed between the first jig 121 and the second jig 122 in the extending direction of the structure 110 as display of information indicating the arrangement of the flat surface 121a of the first jig 121. The video display system 100 displays the position of the longest distance from the end 110a to the mounting member within the region interposed between the first jig 121 and the second jig 122 in the extending direction of the structure 110 as display of information indicating the arrangement of the flat surface 122a of the second jig 122.

### [Configuration of video display system]

As shown in FIG. 1, the video display system 100 includes an image capturing unit 101, an inertial measurement unit 102, a display unit 103, an environmental information detection unit 104, a storage unit 105, an operation detection unit 106, and a control unit 107. The image capturing unit 101, the inertial measurement unit 102, the display unit 103, the environmental information detection unit 104, the storage unit 105, the operation detection unit 106, and the control unit 107 may be housed in one housing, or may be separately housed in a plurality of housings. In the case of being housed in a plurality of housings, the above units may be connected to each other in a wired manner, or may be wirelessly connected to each other.

At least one of the image capturing unit 101 and the display unit 103 in the video display system 100 is portable. The video display system 100 may not include the image capturing unit 101. When the display unit 103 is carried without carrying the image capturing unit 101, the display unit 103 and the inertial measurement unit 102 are housed in one housing. For example, the video display system 100 can be used not only when an HMD is used, but also when a user carries a tablet or the like in which the image capturing unit 101 does not operate and when the user remotely operates the movement of a terminal having the image capturing unit 101 while making confirmation with the display unit 103 at hand. In the present embodiment, a case in which the image capturing unit 101, the inertial measurement unit 102, and the display unit 103 are housed in one housing and an HMD having the housing fixed to a user's head is used will be mainly described.

The image capturing unit 101 captures an image of a real space, and sequentially transmits the captured image to the environmental information detection unit 104. In the present embodiment, the image capturing unit 101 is fixed to a user's head, and the position and posture of the image capturing unit 101 fluctuate in accordance with the movement of the user's head. The position of the image capturing unit 101 is a coordinate position of the image capturing unit 101. The posture of the image capturing unit 101 is rotation around each axis of three-dimensional coordinates (orientation in three-dimensional coordinates). The image capturing unit 101 is constituted by a plurality of cameras such as a depth camera and an RGB camera. The image capturing unit 101 includes not only a front camera that captures an image of a user's visual line direction, but also an environment camera that captures an image of the user's side or the like.

The inertial measurement unit 102 measures external force acting on the image capturing unit 101 or the display unit 103, and sequentially transmits measurement results to the environmental information detection unit 104. In the present embodiment, the inertial measurement unit 102 is constituted by an acceleration sensor, a gyro sensor, an orientation sensor, and the like which are fixed to a user's head.

The display unit 103 includes a display that performs display. The display unit 103 displays a virtual video including a virtual object in accordance with the position and posture of the image capturing unit 101 or the display unit 103. In the present embodiment, the display unit 103 is fixed to a user's head in a state in which the user can visually recognize a virtual object appropriately. The display unit 103 is configured such that the position and posture of the display unit 103 fluctuate in accordance with the movement of the user's head. The position of the display unit 103 is a coordinate position of the display unit 103. The posture of the display unit 103 is rotation around each axis of three-dimensional coordinates (orientation in three-dimensional coordinates). In the present embodiment, the display unit 103 performs display indicating the structure 110 in a real space, display indicating a mounting member scheduled to be mounted on the structure 110, and display of information indicating a distance from the reference position to the position at which the jig 120 is arranged, in accordance with instructions from the control unit 107 to be described later.

The environmental information detection unit 104 detects various types of information on the basis of at least one of an image captured by the image capturing unit 101 and a measurement result of the inertial measurement unit 102. The video display system 100 may not include the inertial measurement unit 102. In this case, the video display system 100 performs various processes in the environmental information detection unit 104 on the basis of the image captured by the image capturing unit 101. In a case where the video display system 100 does not include the image capturing unit 101, the video display system 100 performs various processes in the environmental information detection unit 104 on the basis of the inertial measurement unit 102. The environmental information detection unit 104 includes a reference position detection unit 151, a structure arrangement detection unit 152, a user position detection unit 153, a visual line direction detection unit 154, a display arrangement detection unit 155, and a jig arrangement detection unit 156.

The reference position detection unit 151 detects a reference position for arranging the origin N of a virtual coordinate axis α. In the present embodiment, the reference position detection unit 151 detects a feature point that makes it possible to recognize the three-dimensional arrangement of the reference marker 125 in a real space from the image captured by the image capturing unit 101. The reference position detection unit 151 detects a reference position in a real space from the detected feature point. For example, in a state in which the reference marker 125 is arranged along the end 110a of the structure 110, the reference position detection unit 151 detects the center of the end 110a in the face plate 112 from the feature point of the reference marker 125 as the reference position. The result of detection of the reference position performed by the reference position detection unit 151 is, for example, a relative position of the reference position from the image capturing unit 101 or the display.

The reference position detection unit 151 may detect the reference position not from the reference marker 125 but from the arrangement of the edge of the structure 110 in the image captured by the image capturing unit 101, the surrounding environment of the structure 110 in the image captured by the image capturing unit 101, or the like. The reference position detection unit 151 may separately acquire a signal indicating the reference position in a real space in a wireless or wired manner. The result of detection of the reference position performed by the reference position detection unit 151 may be a position on the image captured by the image capturing unit 101.

The structure arrangement detection unit 152 detects the arrangement of the structure 110 arranged in a real space. In the present embodiment, the structure arrangement detection unit 152 detects the arrangement of the structure 110 on the basis of the reference position detected by the reference position detection unit 151 and another feature point for specifying the direction of the structure 110. The other feature point for specifying the direction of the structure 110 may be the direction of the reference marker 125, the arrangement of a marker provided in the structure 110 separately from the reference marker 125, the arrangement of the edge of the structure 110, or the surrounding environment of the structure 110. For example, the structure arrangement detection unit 152 detects the arrangement of the edge of the structure 110 in a real space from the image captured by the image capturing unit 101.

The result of detection of the arrangement of the structure 110 performed by the structure arrangement detection unit 152 is, for example, a relative arrangement of the structure 110 with respect to the image capturing unit 101 or the display. The structure arrangement detection unit 152 may separately acquire a signal indicating the arrangement of the structure 110 in a real space in a wireless or wired manner. The result of detection of the arrangement of the structure 110 performed by the structure arrangement detection unit 152 may be an arrangement on the image captured by the image capturing unit 101.

The user position detection unit 153 detects the position of a user who performs mounting work. In the present embodiment, the user position detection unit 153 detects a relative position of the image capturing unit 101 with respect to the reference position as the user's position. For example, the user position detection unit 153 detects a feature point of the surrounding environment from the image captured by the image capturing unit 101. The user position detection unit 153 detects the position of the image capturing unit 101 in a real space from the detected feature point. The user position detection unit 153 may detect the position of the image capturing unit 101 on the basis of the image captured by the image capturing unit 101, the result of detection of the reference position, and the measurement result of the inertial measurement unit 102.

The user position detection unit 153 may detect a relative position of the display of the display unit 103 with respect to the reference position as the user's position. The user position detection unit 153 may detect the relative position of the image capturing unit 101 with respect to the reference position as the position of the display. The user position detection unit 153 may detect the position of the display on the basis of the image captured by the image capturing unit 101, the result of detection of the reference position, and the measurement result of the inertial measurement unit 102. The user position detection unit 153 may detect the position of the display without using the image captured by the image capturing unit 101. The user position detection unit 153 may separately acquire a signal indicating the position of the image capturing unit 101 or the display in a real space from, for example, an external image capturing unit or the like.

The user position detection unit 153 may detect the position of the user with respect to any position of the structure 110 rather than the position of the user with respect to the reference position. The user position detection unit 153 may detect the position of the user with respect to the jig 120.

The visual line direction detection unit 154 detects the visual line direction of the user who performs mounting work. Meanwhile, the "visual line direction" may be a direction in which a front camera is directed, may be the center of a captured image, may be a direction in which the display is directed, or may be a direction calculated from the direction of the user's eyeball. In the present embodiment, the visual line direction detection unit 154 detects the posture of the image capturing unit 101 with respect to the reference position as the visual line direction. For example, the visual line direction detection unit 154 detects a feature point of the surrounding environment from the image captured by the image capturing unit 101. The visual line direction detection unit 154 detects the posture of the image capturing unit 101 in a real space from the detected feature point. The visual line direction detection unit 154 may detect the posture of the image capturing unit 101 on the basis of the image captured by the image capturing unit 101, the result of detection of the reference position, and the measurement result of the inertial measurement unit 102.

The visual line direction detection unit 154 may detect the posture of the display of the display unit 103 with respect to the reference position as the visual line direction. The visual line direction detection unit 154 may detect the posture of the image capturing unit 101 with respect to the reference position as the posture of the display. The visual line direction detection unit 154 may detect the posture of the display on the basis of the image captured by the image capturing unit 101, the result of detection of the reference position, and the measurement result of the inertial measurement unit 102. The visual line direction detection unit 154 may detect the posture of the display without using the image captured by the image capturing unit 101. The visual line direction detection unit 154 may separately acquire a signal indicating the posture of the image capturing unit 101 or the display in a real space from, for example, an external image capturing unit or the like.

The display arrangement detection unit 155 detects the arrangement of the display. In the present embodiment, the display arrangement detection unit 155 detects the arrangement of the display with respect to the reference position from the detection result obtained by the user position detection unit 153 and the detection result obtained by the visual line direction detection unit 154.

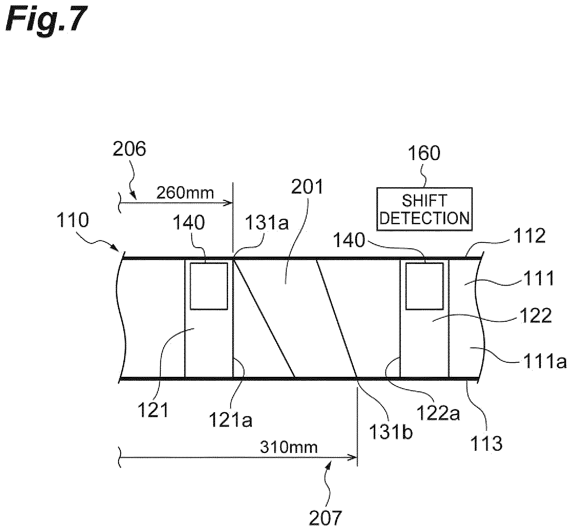

The jig arrangement detection unit 156 detects the arrangement of the jig 120 arranged in a real space. In the present embodiment, the jig arrangement detection unit 156 detects a feature point of each of the first jig 121 and the second jig 122 from the image captured by the image capturing unit 101. As shown in FIG. 7, the feature point of each of the first jig 121 and the second jig 122 may be, for example, a marker 140 provided in each of the first jig 121 and the second jig 122. In the present embodiment, a QR code (registered trademark) is attached to the marker 140. The jig arrangement detection unit 156 recognizes, for example, the QR code of the marker 140 from the image captured by the image capturing unit 101, and calculates the arrangement of the first jig 121 and the second jig 122. The marker 140 may have characteristic patterns other than the QR code. The jig arrangement detection unit 156 may detect color, blinking, electromagnetic information, or the like from the first jig 121 and the second jig 122, and detect the arrangement of each of the first jig 121 and second jig.

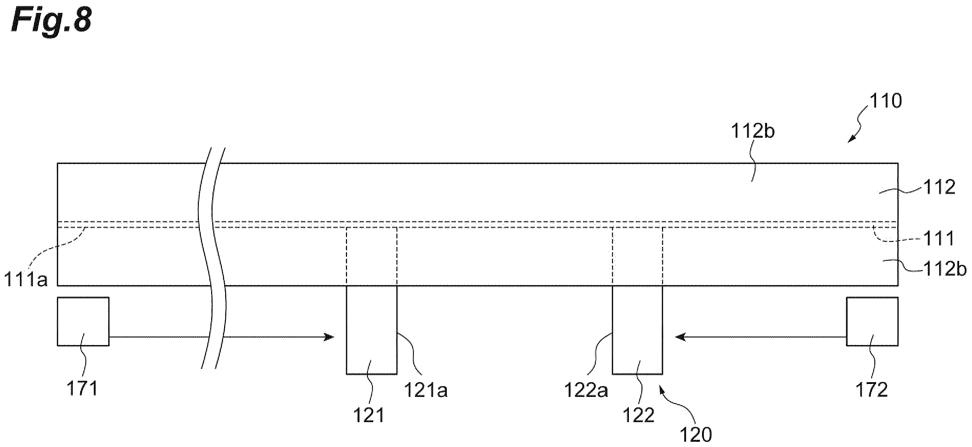

As shown in FIG. 8, the jig arrangement detection unit 156 may detect the arrangement of each of the first jig 121 and second jig on the basis of information acquired from laser distance measurement devices 171 and 172 arranged on both ends of the structure 110. For example, the laser distance measurement device 171 transmits a distance from one end of the structure 110 to the end of the first jig 121 to the jig arrangement detection unit 156. The jig arrangement detection unit 156 detects the arrangement of the first jig 121 from the distance from one end of the structure 110 to the end of the first jig 121. The laser distance measurement device 172 transmits a distance from the other end of the structure 110 to the end of the second jig 122 to the jig arrangement detection unit 156. The jig arrangement detection unit 156 detects the arrangement of the second jig 122 based on the distance from the other end of the structure 110 to the end of the second jig 122. The jig arrangement detection unit 156 may detect the arrangement of each of the first jig 121 and second jig using the entire length of the structure 110 and the thicknesses of the first jig 121 and the second jig 122 which are acquired in advance. The video display system 100 may include the laser distance measurement devices 171 and 172.

The storage unit 105 previously stores various types of information (CG data) required for display of a virtual object. The storage unit 105 stores information on the arrangement of the jig 120 on the structure 110. In the present invention, the information on the arrangement of the jig 120 includes information on the arrangement of the first jig 121 and the second jig 122 of which the flat surface 121a and the flat surface 122a are in contact with the mounting member. The information on the arrangement of the first jig 121 and the second jig 122 includes information on the arrangement of the jig that restricts the position of the mounting member in the extending direction of the structure 110; the angle of inclination of the mounting member with respect to the main surface 111a of the structure 110; and the angle of rotation of the mounting member with respect to the axis orthogonal to the main surface 111a.

For example, the storage unit 105 previously stores the display arrangement of the virtual mounting members 201, 202, 203, and 204 associated in advance with the virtual coordinate axis α in a virtual space and the information 206 and 207 indicating the distance from the reference position to the position at which the jig 120 is arranged. The storage unit 105 stores the display arrangement of the virtual mounting members 201, 202, 203, and 204 and the coordinates on the virtual coordinate axis α of the position at which the jig 120 is arranged. The display arrangement of the virtual mounting members 201, 202, 203, and 204 corresponding to the position and posture of the image capturing unit 101 in a real space and the position at which the jig 120 is arranged are determined by associating the virtual coordinate axis α with the real space.

The storage unit 105 also previously stores a predetermined arrangement relation between the reference marker 125 arranged in a real space and the virtual coordinate axis α. In the present embodiment, the position of a reference point M in a real space of the reference marker 125 and the reference position at which the origin N of the virtual coordinate axis α is arranged are associated with each other. That is, the arrangement of the reference marker 125 in a real space and the origin N of the virtual coordinate axis α are associated with each other.

The operation detection unit 106 detects a user's operation. For example, in the touch panel display of the video display system 100, a position touched by a user is detected. The operation detection unit 106 sequentially transmits detected information to the control unit 107. For example, the operation detection unit 106 transmits signals indicating selected virtual mounting members 201, 202, 203, and 204 to the control unit 107 in accordance with a user's operation. The user's operation which is detected by the operation detection unit 106 may be a hand gesture, a blink, or a button input.

The control unit 107 performs various types of control on the basis of the detection result obtained by the environmental information detection unit 104, the detection result obtained by the operation detection unit 106, and information stored in the storage unit 105. The control unit 107 includes a reference arrangement setting unit 157; a display control unit 158; and a member determination unit 159.

The reference arrangement setting unit 157 sets a relationship between the virtual coordinate axis α for specifying the display arrangement of a virtual object and the position and posture of the image capturing unit 101 or the display detected by the user position detection unit 153 and the visual line direction detection unit 154. In the present embodiment, the reference arrangement setting unit 157 associates the virtual coordinate axis α with a real space in accordance with the arrangement of the structure 110 detected by the structure arrangement detection unit 152. In other words, the reference arrangement setting unit 157 arranges the origin N of the virtual coordinate axis α at the reference position on the basis of the detection result detected by the structure arrangement detection unit 152, and sets the direction of the virtual coordinate axis α in a real space.

The display control unit 158 performs a display process indicating the arrangement of the jig 120 on the structure 110 arranged in a real space on the basis of the information on the arrangement of the jig 120 stored in the storage unit 105 and the detection result obtained by the structure arrangement detection unit 152. For example, the display control unit 158 instructs the display unit 103 to display information indicating the arrangement of a plurality of members, and causes the display unit 103 to display the virtual mounting members 201, 202, 203, and 204 on the structure 110 arranged in a real space as shown in FIG. 2. In the present embodiment, the display control unit 158 acquires the information on the arrangement of the jig 120 from the storage unit 105. The display control unit 158 associates the display arrangement of the virtual mounting members 201, 202, 203, and 204 and the arrangement of the information 206 and 207 indicating the distance from the reference position to the position at which the jig 120 is arranged with the virtual coordinate axis α associated with the real space in the reference arrangement setting unit 157, in accordance with the acquired information on the arrangement of the jig 120. As a result, the display arrangement of the virtual mounting members 201, 202, 203, and 204 and the arrangement of the information 206 and 207 indicating the distance from the reference position to the position at which the jig 120 is arranged are associated with the reference position. In the present embodiment, the display control unit 158 causes the display unit 103 to display the virtual mounting members 201, 202, 203, and 204 and the information 206 and 207 indicating the distance to the position at which the jig 120 is arranged which are associated with the reference position, in accordance with the user's position and visual line direction.

The display control unit 158 may change the display arrangement of information indicating the arrangement of the jig 120 in accordance with the arrangement of the display detected by the display arrangement detection unit 155. For example, when a user has changed the arrangement of the display, the display control unit 158 may change the display arrangement of the structure 110, the display arrangement of the virtual mounting members 201, 202, 203, and 204, and the display arrangement of the information 206 and 207 indicating the distance to the position at which the jig 120 is arranged, on the display, in accordance with the change.

The display control unit 158 displays information indicating a position shift of the jig 120 on the basis of the arrangement of the jig 120 detected by the jig arrangement detection unit 156 and the information on the arrangement of the jig 120 stored in the storage unit 105. For example, when the arrangement of the jig 120 detected by the jig arrangement detection unit 156 shifts from the information on the arrangement of the jig 120 stored in the storage unit 105 by an allowable error or more, the display control unit 158 performs a display process indicating the occurrence of the shift on the display unit 103. For example, when it is determined that the shift has occurred, the display control unit 158 causes the display unit 103 to display information 160 indicating that the shift has occurred, as shown in FIG. 7. When it is determined that the shift has occurred, the display control unit 158 may change the color of the virtual mounting member.

The member determination unit 159 determines a mounting member on which mounting work is performed by a user from a plurality of mounting members corresponding to a plurality of virtual mounting members stored in the storage unit 105. For example, the member determination unit 159 determines at least one mounting member out of the plurality of mounting members as the mounting member on which mounting work is performed by the user on the basis of, for example, at least one of the detection result obtained by the operation detection unit 106, the position of the user with respect to the structure 110, and the user's visual line direction. The display control unit 158 determines information indicating the arrangement of the jig 120 corresponding to the mounting member determined by the member determination unit 159 as information used in the arrangement of the jig 120 by the user, and performs a display process on information indicating the arrangement of the jig 120 corresponding to the other mounting members. For example, when the member determination unit 159 has determined the mounting member 131 corresponding to the virtual mounting member 201 as the mounting member on which mounting work is performed by the user, the display control unit 158 instructs the display unit 103 not to display information indicating the arrangement of the jig 120 corresponding to the remaining mounting members. A display process for the remaining jig 120 is not limited to non-display, but includes changing display such as semi-transparent display, blinking display, contour display, color change, and display density change. For the remaining jig 120, only information indicating the distance of the jig 120 may be changed in display.

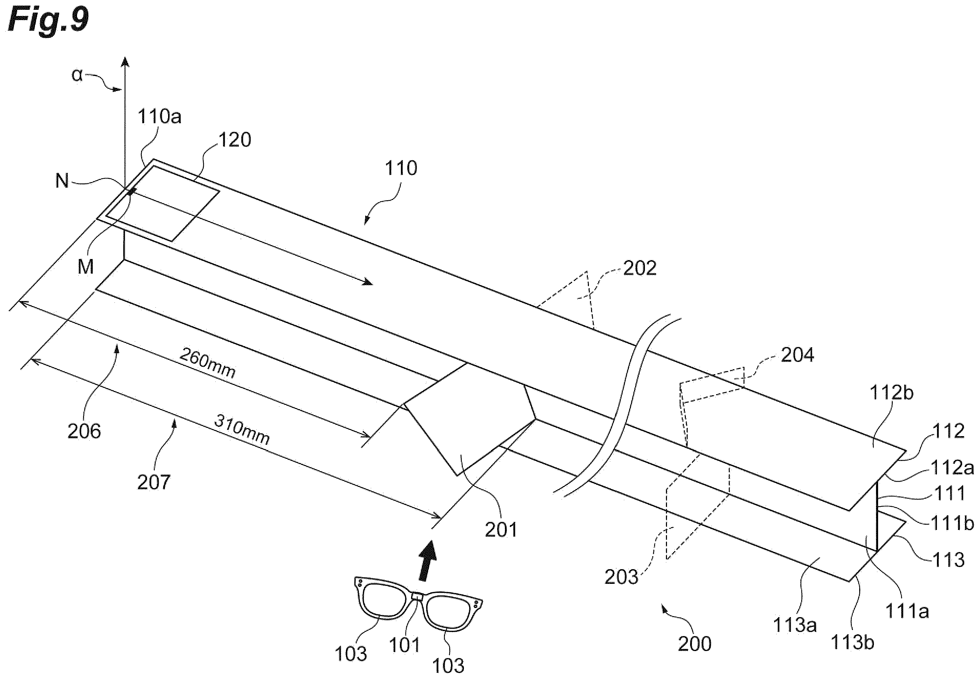

The display control unit 158 may change display of information indicating the arrangement of the jig 120 corresponding to the mounting member determined by the member determination unit 159. FIG. 9 shows a state in which information relating to the virtual mounting members 202, 203, and 204 is not displayed. The display control unit 158 may cause the display unit 103 to display information indicating the arrangement of the jig 120 corresponding to the mounting member determined by the member determination unit 159 from the state of non-display.

For example, the member determination unit 159 determines a mounting member corresponding to the user's operation among a plurality of mounting members on the basis of the detection result obtained by the operation detection unit 106 and the information on the arrangement of the jig 120 stored in the storage unit 105. The display control unit 158 performs a display process of information indicating the arrangement of the jig 120 corresponding to the determined mounting member. For example, when the user touches the virtual mounting member 201, the member determination unit 159 determines the mounting member 131 corresponding to the virtual mounting member 201 operated by the user as the mounting member on which mounting work is performed by the user. The display control unit 158 may leave display of the virtual mounting member 201 operated by the user and display of a distance corresponding thereto, as shown in FIG. 9, from a state in which the virtual mounting members 201, 202, 203, and 204 are displayed on the structure 110, and do not display the virtual mounting members 202, 203, and 204. When the information 206 and 207 indicating the distance of the jig 120 are manipulated instead of the virtual mounting member in the operation detection unit 106, the member determination unit 159 may determine a mounting member corresponding to the manipulated information 206 and 207 as the mounting member on which mounting work is performed by the user.

For example, the member determination unit 159 determines a mounting member corresponding to the detection result obtained by the visual line direction detection unit 154 among a plurality of mounting members on the basis of the detection result obtained by the visual line direction detection unit 154 and the information on the arrangement of the jig 120 stored in the storage unit 105. The display control unit 158 performs a display process of information indicating the arrangement of the jig 120 relating to the determined mounting member. For example, as shown in FIG. 9, the display control unit 158 may leave display of the virtual mounting member 201 corresponding to the visual line direction detected by the visual line direction detection unit 154 and display of the information 206 and 207 corresponding thereto, and do not display the virtual mounting members 202, 203, and 204. The virtual mounting member corresponding to the visual line direction may be a front-most virtual mounting member located on a half line in the visual line direction. The display control unit 158 may change and display the color of the virtual mounting member located on an extended line in the visual line direction, and definitely determine display used in the arrangement of the jig 120 in accordance with the detection result for the user's operation performed by the operation detection unit 106.

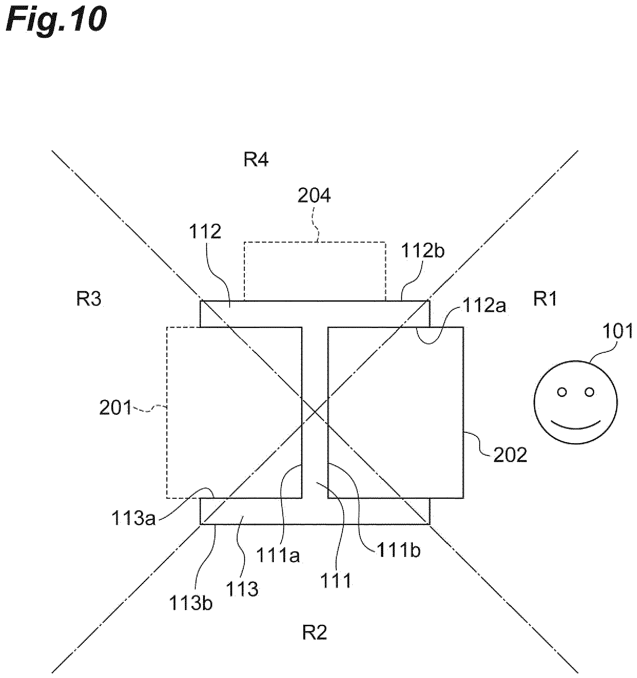

For example, the member determination unit 159 determines a mounting member corresponding to the detection result obtained by the user position detection unit 153 among a plurality of mounting members on the basis of the detection result obtained by the user position detection unit 153 and the information on the arrangement of the jig 120 stored in the storage unit 105. The display control unit 158 performs a display process of information indicating the arrangement of the jig 120 relating to the determined mounting member. For example, the member determination unit 159 determines where on the left, right, top and bottom the user is located relative to the structure 110 on the basis of the detection result obtained by the user position detection unit 153 and the information on the arrangement of the jig 120 stored in the storage unit 105. For example, as shown in FIG. 10, a plane orthogonal to the extending direction of the structure 110 is divided into four regions R1, R2, R3, and R4. In a case where the user's position detected by the user position detection unit 153 is the region R1, the member determination unit 159 outputs the virtual mounting member 202 corresponding to the region R1 as a determination result. The display control unit 158 may leave display of information indicating the virtual mounting member 202 and a distance corresponding thereto, and do not display the remaining information. In a case where the user's position is located near between different regions, the member determination unit 159 outputs a virtual mounting member corresponding to both the regions as a determination result.

The member determination unit 159 may calculate a distance between the user and the structure 110 from the detection result obtained by the user position detection unit 153, and determine a mounting member in accordance with the distance. For example, the member determination unit 159 may output a virtual mounting member located within two meters of the user as a determination result. In this case, the display control unit 158 may, for example, display a virtual mounting member located within two meters of the user in blue, and may not display a virtual mounting member located two meters or more away from the user or display it semi-transparently. Even in the case of a virtual mounting member located within two meters of the user, the display control unit 158 may not display the virtual mounting member located on the opposite side of the user with the structure 110 interposed therebetween. For example, in FIG. 9, even in a case where the virtual mounting member 202 is located within two meters of the user, the virtual mounting member 202 is located on the opposite side of the user with the structure 110 interposed therebetween, and thus the display control unit 158 does not display the virtual mounting member 202. The member determination unit 159 may acquire an arrangement relation between the user and the jig 120 from the detection result obtained by the user position detection unit 153, and determine a mounting member in accordance with the arrangement relation.

### [Process in video display system]

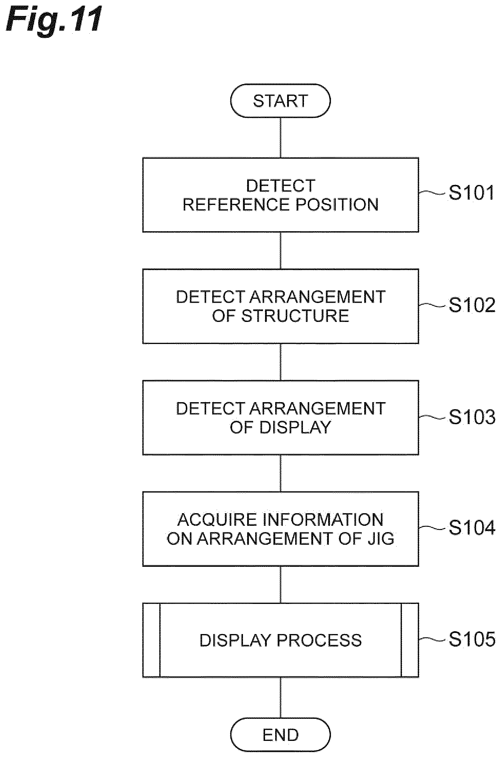

Next, an example of processing which is performed in the video display system 100 will be described with reference to FIG. 11. FIG. 11 is a flow chart illustrating an example of processing which is performed in the video display system 100.

In step S101, the reference position detection unit 151 detects a reference position for arranging the origin N of the virtual coordinate axis α. Subsequently, the process proceeds to step S102.

In step S102, the structure arrangement detection unit 152 detects the arrangement of the structure 110 arranged in a real space. Subsequently, the process proceeds to step S103.

In step S103, the display arrangement detection unit 155 detects the arrangement of the display of the display unit 103. Subsequently, the process proceeds to step S104.

In step S104, the jig arrangement detection unit 156 detects the arrangement of the jig 120 arranged in a real space. Subsequently, the process proceeds to step S105.

In step S105, the control unit 107 performs a display process on the basis of information detected in steps S102 to S104. The display unit 103 displays various types of information in accordance with instructions from the control unit 107.

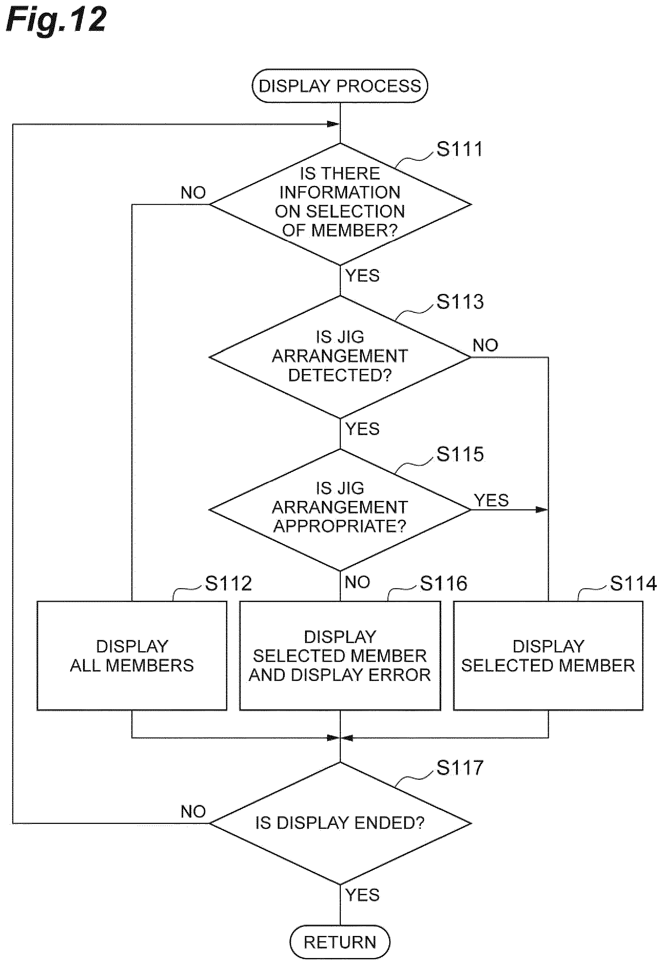

Next, a display process which is performed by the control unit 107 will be described with reference to FIG. 12. FIG. 12 is a flow chart illustrating a display process which is performed by the control unit 107.

In step S111, the control unit 107 determines whether there is information on the selection of a member. The information on the selection of a member is, for example, a determination result determined by the member determination unit 159 on the basis of at least one of the detection result obtained by the operation detection unit 106, the position of the user with respect to the structure 110, and the user's visual line direction. In a case where it is determined that there is no information on the selection of a member (NO in step S111), the control unit 107 advances the process to step S112. In a case where it is determined that there is the information on the selection of a member (YES in step S111), the control unit 107 advances the process to step S113.

In step S112, the control unit 107 causes the display control unit 158 to display all the virtual mounting members stored in the storage unit 105 on the display unit 103, and advances the process to step S 117.

In step S113, the control unit 107 determines whether the jig arrangement has been detected in the jig arrangement detection unit 156. In a case where it is determined that the jig arrangement is not detected (NO in step S113), the control unit 107 advances the process to step S114. In a case where it is determined that the jig arrangement is detected (YES in step S113), the control unit 107 advances the process to step S115.

In step S114, the control unit 107 causes the display control unit 158 to display a virtual mounting member corresponding to a mounting member determined by the member determination unit 159 on the display unit 103, and advances the process to step S117.

In step S115, the control unit 107 determines whether the jig arrangement is appropriate on the basis of the detection result obtained by the jig arrangement detection unit 156. In a case where it is determined that the jig arrangement is appropriate (YES in step S115), the control unit 107 advances the process to step S114. In a case where it is determined that the jig arrangement is not appropriate (NO in step S115), the control unit 107 advances the process to step S116.

In step S116, the control unit 107 causes the display control unit 158 to display a virtual mounting member corresponding to a mounting member determined by the member determination unit 159 and an error on the display unit 103, and the control unit 107 advances the process to step S117. In this case, the display control unit 158 displays, for example, the information 160 indicating that a shift has occurred on the display unit 103.

In step S117, the control unit 107 determines whether to end the display process. In a case where it is determined that the display process is not ended (NO in step S117), the control unit 107 advances the process to step S111. In a case where it is determined that the display process is ended (YES in step S117), the control unit 107 ends the display process.

### [Operations and effects of video display system]

Next, main operations and effects of the video display system 100 according to the present embodiment will be described.

In the video display system 100, the information on the arrangement of the jig 120 for positioning a mounting member on the structure 110 is stored, and the display process indicating the arrangement of the jig 120 is performed on the structure 110 arranged in a real space. A user can easily arrange the jig 120 in accordance with the display process indicating the arrangement of the jig 120. As a result, the mounting member is positioned by the jig 120 on the structure 110, and thus it is possible to easily mount the mounting member on the structure 110.

For example, the mounting member 131 is mounted on the structure 110 in a state in which it is also inclined with respect to the main surface 112a of the face plate 112 and the main surface 113a of the face plate 113 while being inclined with respect to the main surface 111a of the face plate 111. It is very difficult to perform mounting work in such a state. The jig 120 includes the first jig 121 having the flat surface 121a and the second jig 122 having the flat surface 122a facing the flat surface 121a. The information on the arrangement of the jig 120 includes the information on the arrangement of the jig 120 of which the flat surface 121a and the flat surface 122a abut the mounting member. Therefore, according to the video display system 100, it is possible to easily and appropriately arrange the jig 120 and to easily position the mounting member 131 on the structure 110.

The structure 110 has the main surface 111a which extends in a predetermined direction and with which the mounting member is in contact. The information on the arrangement of the jig 120 includes the information on the arrangement of the jig 120 for restricting the position of the mounting member in a predetermined direction, the angle of inclination of the mounting member with respect to the main surface 111a, and the angle of rotation of the member with respect to the axis orthogonal to the main surface 111a. Therefore, according to the video display system 100, it is possible to easily and appropriately arrange the jig 120 and to easily position the mounting member 131 on the structure 110.

The video display system 100 includes the display arrangement detection unit 155 that detects the arrangement of the display that performs display based on the display process. The control unit 107 changes display of the structure and the display arrangement of information indicating the arrangement of the jig 120 on the display in accordance with the arrangement of the display detected by the display arrangement detection unit 155. Therefore, the user can confirm the arrangement of the jig 120 on the structure at any position by moving the display.

The video display system 100 includes the jig arrangement detection unit 156 that detects the arrangement of the jig 120 arranged in a real space. The control unit 107 displays the information 160 indicating a position shift of the jig 120 on the basis of the arrangement of the jig 120 detected by the jig arrangement detection unit 156 and the information on the arrangement of the jig 120 stored in the storage unit 105. Therefore, the user can easily confirm whether the arrangement of the jig 120 is appropriate.

The video display system 100 includes the operation detection unit 106 that detects a user's operation. The control unit 107 performs a display process of information indicating the arrangement of the jig relating to a mounting member corresponding to the user's operation among a plurality of mounting members on the basis of the detection result obtained by the operation detection unit 106 and the information on the arrangement of the jig 120 stored in the storage unit 105. Therefore, the user can select information indicating the arrangement of the jig to be displayed.

The storage unit 105 stores information on the arrangement of a plurality of mounting members on the structure 110. The control unit 107 gives an instruction for display of information indicating the arrangement of a plurality of mounting members on the basis of the information on the arrangement of the plurality of members stored in the storage unit 105. The control unit 107 determines a mounting member corresponding to the detection result obtained by the operation detection unit 106 among the plurality of mounting members, and performs a display process indicating the arrangement of the jig 120 relating to the determined mounting member. Therefore, the user can select information indicating the arrangement of the jig by operating the displayed mounting member.

The video display system 100 includes the user position detection unit 153 that detects a user's position. The control unit 107 performs a display process of information indicating the arrangement of the jig relating to a mounting member corresponding to the user's position among a plurality of mounting members on the basis of the detection result obtained by the user position detection unit 153 and the information on the arrangement of the jig 120 stored in the storage unit 105. Therefore, information indicating appropriate arrangement of the jig can be displayed in accordance with the user's position.

The video display system 100 includes the visual line direction detection unit 154 that detects a user's visual line direction. The control unit 107 performs a display process of information indicating the arrangement of the jig relating to a mounting member corresponding to the user's visual line direction among a plurality of mounting members on the basis of the detection result obtained by the visual line direction detection unit 154 and the information on the arrangement of the jig 120 stored in the storage unit 105. Therefore, information indicating appropriate arrangement of the jig can be displayed in accordance with the user's visual line direction.

Meanwhile, the block diagram used in the description of the above embodiment represents blocks in units of functions. These functional blocks (constituent elements) are realized by any combination of at least one of hardware and software. In addition, a method of realizing each functional block is not particularly limited. That is, each functional block may be realized using one device which is physically or logically coupled, or may be realized using two or more devices which are physically or logically separated from each other by connecting the plurality of devices directly and/or indirectly (for example, using a wired or wireless manner or the like). The functional block may be realized by combining software with the one device or the plurality of devices.

Examples of the functions include determining, deciding, judging, calculating, computing, process, deriving, investigating, search, ascertaining, receiving, transmitting, output, access, resolving, selecting, choosing, establishing, comparing, assuming, expecting, considering, broadcasting, notifying, communicating, forwarding, configuring, reconfiguring, allocating (or mapping), assigning, and the like, but there is no limitation thereto. For example, a functional block (constituent element) for causing transmitting to function is referred to as a transmitting unit or a transmitter. As described above, any realization methods are not particularly limited.

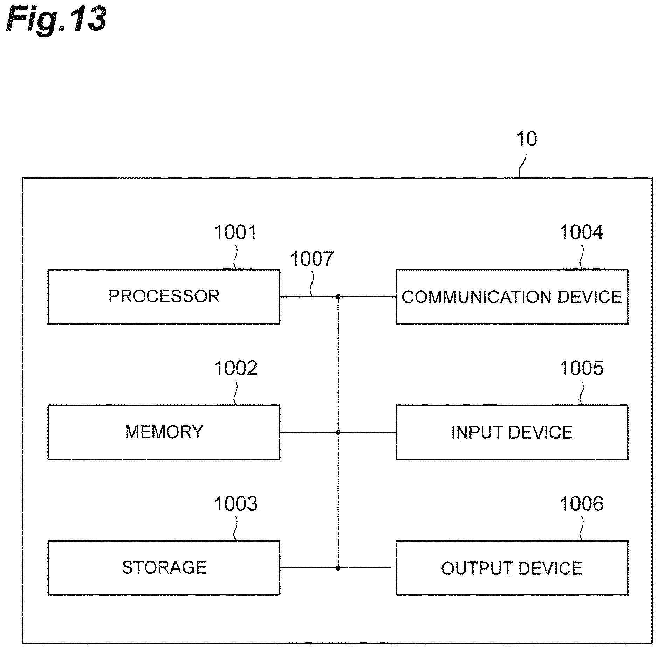

For example, the video display system in an embodiment of the present disclosure may function as a computer that performs processing in the present embodiment. FIG. 13 is a diagram illustrating an example of a hardware configuration of the video display system 100 according to an embodiment of the present disclosure. The video display system 100 described above may be physically configured as a computer device including a processor 1001, a memory 1002, a storage 1003, a communication device 1004, an input device 1005, an output device 1006, a bus 1007, and the like. In addition to the above components, the video display system 100 also includes hardware such as the image capturing unit 101, a sensor used for the inertial measurement unit 102, and a display.

Meanwhile, in the following description, the word "device" can be replaced with a circuit, a unit, or the like. The hardware configuration of the video display system 100 may be configured to include one or a plurality of devices shown in the drawing, or may be configured without including some devices.

The processor 1001 performs an arithmetic operation by reading predetermined software (a program) onto hardware such as the processor 1001 or the memory 1002, and thus each function of the video display system 100 is realized by controlling communication in the communication device 1004 or controlling at least one of reading-out and writing of data in the memory 1002 and the storage 1003.

The processor 1001 controls the whole computer, for example, by operating an operating system. The processor 1001 may be constituted by a central processing unit (CPU) including an interface with a peripheral device, a control device, an arithmetic operation device, a register, and the like. For example, the environmental information detection unit 104, the control unit 107, and the like may be realized by the processor 1001.

In addition, the processor 1001 reads out a program (a program code), a software module, data, or the like from at least one of the storage 1003 and the communication device 1004 into the memory 1002, and executes various types of processes in accordance therewith. An example of the program which is used includes a program causing a computer to execute at least some of the operations described in the foregoing embodiment. For example, the display unit 103, the environmental information detection unit 104, the operation detection unit 106, and the control unit 107 are stored in the memory 1002, and may be realized by a control program which is operated in the processor 1001. Similarly, other functional blocks may be realized. The execution of various types of processes described above by one processor 1001 has been described, but these processes may be simultaneously or sequentially executed by two or more processors 1001. One or more chips may be mounted in the processor 1001. Meanwhile, the program may be transmitted from a network through an electrical communication line.

The memory 1002 is a computer readable recording medium, and may be constituted by at least one of, for example, a read only memory (ROM), an erasable programmable ROM (EPROM), an electrically erasable programmable ROM (EEPROM), a random access memory (RAM), and the like. The memory 1002 may be referred to as a register, a cache, a main memory (main storage device), or the like. The memory 1002 can store a program (a program code), a software module, or the like that can be executed in order to carry out a wireless communication method according to an embodiment of the present disclosure.

The storage 1003 is a computer readable recording medium, and may be constituted by at least one of, for example, an optical disc such as a compact disc ROM (CD-ROM), a hard disk drive, a flexible disk, a magnetooptic disc (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The storage 1003 may be referred to as an auxiliary storage device. The foregoing storage medium may be, for example, a database including at least one of the memory 1002 and the storage 1003, a server, or another suitable medium.

The communication device 1004 is hardware (a transmitting and receiving device) for performing communication between computers through at least one of a wired network and a wireless network, and is also referred to as, for example, a network device, a network controller, a network card, a communication module, or the like.

The input device 1005 is an input device (such as, for example, a keyboard, a mouse, a microphone, a switch, a button, or a sensor) that receives an input from the outside. The output device 1006 is an output device (such as, for example, a display, a speaker, or an LED lamp) that executes an output to the outside. Meanwhile, the input device 1005 and the output device 1006 may be an integrated component (for example, a touch panel). In addition, respective devices such as the processor 1001 and the memory 1002 are connected to each other through the bus 1007 for communicating information. The bus 1007 may be configured using a single bus, or may be configured using a different bus between devices.

In addition, the video display system 100 may be configured to include hardware such as a microprocessor, a digital signal processor (DSP), an application specific integrated circuit (ASIC), a programmable logic device (PLD), or a field programmable gate array (FPGA), or some or all of the respective functional blocks may be realized by the hardware. For example, the processor 1001 may be mounted using at least one of the hardware.

The aspects/embodiments described in the present disclosure may be used alone, may be used in combination, or may be switched during implementation thereof. In addition, notification of predetermined information (for example, notification of "X") is not limited to explicit transmission, and may be performed by implicit transmission (for example, the notification of the predetermined information is not performed).

Hereinbefore, the present invention has been described in detail, but it is apparent to those skilled in the art that the present invention should not be limited to the embodiments described in the present disclosure. The present invention can be implemented with modified and changed aspects without departing from the scope of the present invention, which is determined by the claims. Therefore, the description of the present disclosure is intended for illustrative explanation only, and does not impose any limited interpretation on the present invention,

The aspects/embodiments described in the present disclosure may be applied to at least one of a system employing long term evolution (LTE), LTE-Advanced (LTE-A), SUPER 3G, IMT-Advanced, a 4th generation mobile communication system (4G), a 5th generation mobile communication system (5G), Future Radio Access (FRA), new Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended on the basis thereof. In addition, a plurality of systems may be combined (for example, 5G and at least one of LTE and LTE-A are combined or the like) and be applied.

The order of the processing sequences, the sequences, the flow charts, and the like of the aspects/embodiments described above in the present disclosure may be changed as long as they are compatible with each other. For example, in the methods described in the present disclosure, various steps as elements are presented using an exemplary order but the methods are not limited to the presented order.

The input or output information or the like may be stored in a specific place (for example, a memory) or may be managed using a management table. The input or output information or the like may be overwritten, updated, or added. The output information or the like may be deleted. The input information or the like may be transmitted to another device.

Determination may be performed using a value (0 or 1) which is expressed by one bit, may be performed using a Boolean value (true or false), or may be performed by comparison of numerical values (for example, comparison thereof with a predetermined value).

Information, a signal or the like described in the present disclosure may be expressed using any of various different techniques. For example, data, an instruction, a command, information, a signal, a bit, a symbol, and a chip which can be mentioned in the overall description may be expressed by a voltage, a current, an electromagnetic wave, a magnetic field or magnetic particles, an optical field or photons, or any combination thereof.

Information, a signal or the like described in the present disclosure may be expressed using any of various different techniques. For example, data, an instruction, a command, information, a signal, a bit, a symbol, and a chip which can be mentioned in the overall description may be expressed by a voltage, a current, an electromagnetic wave, a magnetic field or magnetic particles, an optical field or photons, or any combination thereof.

The term "determining" which is used in the present disclosure may include various types of operations. The term "determining" may include regarding operations such as, for example, judging, calculating, computing, processing, deriving, investigating, looking up/search/inquiry (for example, looking up in a table, a database or a separate data structure), or ascertaining as an operation such as "determining." In addition, the term "determining" may include regarding operations such as receiving (for example, receiving information), transmitting (for example, transmitting information), input, output, or accessing (for example, accessing data in a memory) as an operation such as "determining." In addition, the term "determining" may include regarding operations such as resolving, selecting, choosing, establishing, or comparing as an operation such as "determining." That is, the term "determining" may include regarding some kind of operation as an operation such as "determining." In addition, the term "determining" may be replaced with the term "assuming," "expecting," "considering," or the like.

An expression "on the basis of ~" which is used in the present disclosure does not refer to only "on the basis of only ~," unless otherwise described. In other words, the expression "on the basis of ~" refers to both "on the basis of only ~" and "on the basis of at least ~."

Any reference to elements having names such as "first" and "second" which are used in the present disclosure does not generally limit amounts or an order of the elements. The terms can be conveniently used to distinguish two or more elements in the present disclosure. Accordingly, reference to first and second elements does not mean that only two elements are employed or that the first element has to precede the second element in any form.

In the present disclosure, when the terms "include" and "including" and modifications thereof are used, these terms are intended to have a comprehensive meaning similarly to the term "comprising." Further, the term "or" which is used in the present disclosure is intended not to mean an exclusive logical sum.

In the present disclosure, when articles are added by translation like, for example, "a," "an" and "the" in English, the present disclosure may include that nouns that follow these articles are plural forms.

In the present disclosure, an expression "A and B are different" may mean that "A and B are different from each other." Meanwhile, the expression may mean that "A and B are different from C." The terms "separated," "coupled," and the like may also be construed similarly to "different."

### Reference Signs List

100: Video display system; 105: Storage unit; 106: Operation detection unit; 107: Control unit; 110: Structure; 111a: Main surface; 120: Jig; 121: First jig; 121a, 122a: Flat surface; 122: Second jig; 131, 132: Mounting member; 152: Structure arrangement detection unit; 153: User position detection unit; 154: Visual line direction detection unit; 155: Display arrangement detection unit; 156: Jig arrangement detection unit; 201, 202, 203, 204: Virtual mounting member.

## Claims

1. A video display system (100) used in mounting a member (131, 132) on a structure (110), comprising:
a storage unit (105) configured to store information on arrangement of a jig (120) for positioning the member (131, 132) on the structure (110);
a structure arrangement detection unit (152) configured to detect an arrangement of the structure (110) arranged in a real space; and
a control unit (107) configured to perform a display process indicating the arrangement of the jig (120) on the structure (110) arranged in the real space on the basis of the information (206, 207) on the arrangement of the jig (120) stored in the storage unit (105) and a detection result obtained by the structure arrangement detection unit (152);
**characterised in that**:
the structure (110) extends in a predetermined direction with a main surface (111a) with which the member (131) is in contact, and the information (206, 207) on the arrangement of the jig (120) includes information (206, 207) on the arrangement of the jig (120) for restricting a position of the member (131, 132) in the predetermined direction; an angle of inclination of the member (131, 132) with respect to the main surface (111a); and an angle of rotation of the member (131, 132) with respect to an axis orthogonal to the main surface (111a); and
wherein the jig (120) includes a first jig (121) having a first surface (121a) and a second jig (122) having a second surface (122a) facing the first surface (121a), and the information (206, 207) on the arrangement of the jig (120) includes information (206, 207) on arrangement of the first and second jigs (121, 122) of which the first surface (121a) and the second surface (122a) abut the member (131).

2. The video display system (100) according to claim 1, further comprising a display arrangement detection unit (155) configured to detect an arrangement of a display that performs display based on the display process,
wherein the control unit (107) changes a display arrangement of the structure (110) and a display arrangement of information (206, 207) indicating the arrangement of the jig (120) on the display in accordance with the arrangement of the display detected by the display arrangement detection unit (155).

3. The video display system (100) according to claim 1 or 2, further comprising a jig arrangement detection unit (156) configured to detect the arrangement of the jig (120) arranged in the real space,
wherein the control unit (107) displays information (206, 207) indicating a position shift of the jig (120) on the basis of the arrangement of the jig (120) detected by the jig arrangement detection unit (156) and the information (206, 207) on the arrangement of the jig (120) stored in the storage unit (105).

4. The video display system (100) according to claim 1 or 2, further comprising an operation detection unit (106) configured to detect a user's operation,
wherein the control unit (107) performs a display process of information (206, 207) indicating the arrangement of the jig (120) relating to a member (131, 132) corresponding to the user's operation among a plurality of the members on the basis of a detection result obtained by the operation detection unit (106) and the information (206, 207) on the arrangement of the jig (120) stored in the storage unit (105).

5. The video display system (100) according to claim 4, wherein the storage unit (105) stores information (206, 207) on arrangement of the plurality of members on the structure (110), and
the control unit (107) gives an instruction for display of information (206, 207) indicating the arrangement of the plurality of members on the basis of the information (206, 207) on the arrangement of the plurality of members stored in the storage unit (105),
determines a member (131, 132) corresponding to the detection result obtained by the operation detection unit (106) among the plurality of members, and
performs a display process indicating the arrangement of the jig (120) relating to the determined member.

6. The video display system (100) according to any one of claims 1 to 5, further comprising a user position detection unit (153) configured to detect a user's position,
wherein the control unit (107) performs a display process of information (206, 207) indicating the arrangement of the jig (120) relating to a member (131, 132) corresponding to the user's position among a plurality of the members on the basis of a detection result obtained by the user position detection unit (153) and the information (206, 207) on the arrangement of the jig (120) stored in the storage unit (105).

7. The video display system (100) according to any one of claims 1 to 6, further comprising a visual line direction detection unit (154) configured to detect a user's visual line direction,
wherein the control unit (107) performs a display process of information (206, 207) indicating the arrangement of the jig (120) relating to a member (131, 132) corresponding to the user's visual line direction among a plurality of the members on the basis of a detection result obtained by the visual line direction detection unit (154) and the information (206, 207) on the arrangement of the jig (120) stored in the storage unit (105).

## Patentansprüche

1. Ein Videoanzeigesystem (100), das bei der Montage eines Elements (131, 132) an einer Struktur (110) verwendet wird, umfassend:
eine Speichereinheit (105), die eingerichtet ist, um Information über die Anordnung einer Spannvorrichtung (120) zum Positionieren des Elements (131, 132) auf der Struktur (110) zu speichern;
eine Strukturanordnungserfassungseinheit (152), die eingerichtet ist, um eine Anordnung der Struktur (110), die in einem realen Raum angeordnet ist, zu erfassen; und
eine Steuerungseinheit (107), die eingerichtet ist, um einen Anzeigevorgang durchzuführen, der die Anordnung der Spannvorrichtung (120) an der in dem realen Raum angeordneten Struktur (110) basierend auf der in der Speichereinheit (105) gespeicherten Information (206, 207) über die Anordnung der Spannvorrichtung (120) und einem von der Strukturanordnungserfassungseinheit (152) erhaltenen Erfassungsergebnis angibt;
**dadurch gekennzeichnet, dass**:
die Struktur (110) sich in einer vorermittelten Richtung mit einer Hauptoberfläche (111a) erstreckt, mit der das Element (131) in Kontakt ist, und die Information (206, 207) über die Anordnung der Spannvorrichtung (120) eine Information (206, 207) über die Anordnung der Spannvorrichtung (120) für die Begrenzung einer Position des Elements (131, 132) in der vorermittelten Richtung aufweist; einen Neigungswinkel des Elements (131, 132) in Bezug auf die Hauptoberfläche (111a); und einen Drehwinkel des Elements (131, 132) in Bezug auf eine Achse orthogonal zu der Hauptoberfläche (111a); und
wobei die Spannvorrichtung (120) eine erste Spannvorrichtung (121) mit einer ersten Oberfläche (121a) und eine zweite Spannvorrichtung (122) mit einer zweiten Oberfläche (122a), die der ersten Oberfläche (121a) zugewandt ist, aufweist, und die Information (206, 207) über die Anordnung der Spannvorrichtung (120) Information (206, 207) über die Anordnung der ersten und der zweiten Spannvorrichtung (121, 122), von denen die erste Oberfläche (121a) und die zweite Oberfläche (122a) an dem Element (131) anliegen, aufweist.

2. Das Videoanzeigesystem (100) gemäß Anspruch 1,
weiter umfassend eine Anzeigeanordnungserfassungseinheit (155), die eingerichtet ist, um eine Anordnung einer Anzeige zu erfassen, die eine Anzeige basierend auf dem Anzeigevorgang durchführt,
wobei die Steuereinheit (107) eine Anzeigeanordnung der Struktur (110) und eine Anzeigeanordnung von Information (206, 207), die die Anordnung der Spannvorrichtung (120) auf der Anzeige angibt, gemäß der von der Anzeigeanordnungserfassungseinheit (155) erfassten Anordnung der Anzeige ändert.

3. Das Videoanzeigesystem (100) gemäß Anspruch 1 oder 2, weiter umfassend eine Spannvorrichtungsanordnungserfassungseinheit (156), die eingerichtet ist, um die Anordnung der in dem realen Raum angeordneten Spannvorrichtung (120) zu erfassen,
wobei die Steuerungseinheit (107) Information (206, 207) anzeigt, die eine Positionsverschiebung der Spannvorrichtung (120) basierend auf der von der Spannvorrichtungsanordnungserfassungseinheit (156) erfassten Anordnung der Spannvorrichtung (120) und der in der Speichereinheit (105) gespeicherten Information (206, 207) über die Anordnung der Vorrichtung (120) angibt.

4. Das Videoanzeigesystem (100) gemäß Anspruch 1 oder 2, weiter umfassend eine Bedienungserkennungseinheit (106), die eingerichtet ist, um eine Bedienung eines Benutzers zu erfassen,
wobei die Steuerungseinheit (107) einen Anzeigevorgang von Information (206, 207) durchführt, die die Anordnung der Spannvorrichtung (120) bezüglich eines Elements (131, 132), das der Bedienung des Benutzers unter einer Mehrzahl der Elemente entspricht, basierend auf einem Erfassungsergebnis, das durch die Bedienungserfassungseinheit (106) erhalten ist, und der Information (206, 207) über die Anordnung der Spannvorrichtung (120), die in der Speichereinheit (105) gespeichert ist, angibt.

5. Das Videoanzeigesystem (100) gemäß Anspruch 4, wobei die Speichereinheit (105) Information (206, 207) über die Anordnung der Mehrzahl von Elementen an der Struktur (110) speichert, und
die Steuerungsvorrichtung (107) einen Befehl zur Anzeige von Information (206, 207) gibt, die die Anordnung der Mehrzahl von Elementen basierend auf der in der Speichereinheit (105) gespeicherten Information (206, 207) über die Anordnung der Mehrzahl von Elementen angibt,
ein Element (131, 132), das dem von der Bedienungserfassungseinheit (106) erhaltenen Erfassungsergebnis unter der Mehrzahl der Elemente entspricht, ermittelt, und
einen Anzeigevorgang durchführt, der die Anordnung der Spannvorrichtung (120) bezüglich des ermittelten Elements anzeigt.

6. Das Videoanzeigesystem (100) gemäß einem der Ansprüche 1 bis 5, weiter umfassend eine Benutzerpositionserfassungseinheit (153), die eingerichtet ist, um die Position eines Benutzers zu erfassen,
wobei die Steuerungseinheit (107) einen Anzeigevorgang von Information (206, 207) durchführt, die die Anordnung der Spannvorrichtung (120) bezüglich eines Elements (131, 132) angibt, das der Position des Benutzers unter einer Mehrzahl der Elemente entspricht, basierend auf einem Erfassungsergebnis, das mittels der Benutzerpositionserfassungseinheit (153) erhalten ist, und der Information (206, 207) über die Anordnung der Spannvorrichtung (120), die in der Speichereinheit (105) gespeichert ist.

7. Das Videoanzeigesystem (100) gemäß einem der Ansprüche 1 bis 6, weiter umfassend eine Visuallinienrichtungserfassungseinheit (154), die eingerichtet ist, um die visuelle Linienrichtung eines Benutzers zu erfassen,
wobei die Steuerungsvorrichtung (107) einen Anzeigevorgang von Information (206, 207) durchführt, die die Anordnung der Vorrichtung (120) bezüglich eines Elements (131, 132) angibt, das der visuellen Linienrichtung des Benutzers unter einer Mehrzahl der Elemente entspricht, basierend auf einem Erfassungsergebnis, das mittels der Visuallinienrichtungserfassungseinheit (154) erhalten ist, und der Information (206, 207) über die Anordnung der Spannvorrichtung (120), die in der Speichereinheit (105) gespeichert ist.

## Revendications

1. Système d'affichage vidéo (100) utilisé pour le montage d'un élément (131, 132) sur une structure (110), comprenant :
une unité de stockage (105) configurée pour stocker des informations sur l'agencement d'un gabarit (120) pour positionner l'élément (131, 132) sur la structure (110) ;
une unité de détection d'agencement de structure (152) configurée pour détecter un agencement de la structure (110) agencée dans un espace réel ; et
une unité de commande (107) configurée pour effectuer un processus d'affichage indiquant l'agencement du gabarit (120) sur la structure (110) agencée dans l'espace réel sur la base des informations (206, 207) sur l'agencement du gabarit (120) stockées dans l'unité de stockage (105) et d'un résultat de détection obtenu par l'unité de détection d'agencement de structure (152) ;
**caractérisé en ce que** :
la structure (110) s'étend dans une direction prédéterminée avec une surface principale (111a) avec laquelle l'élément (131) est en contact, et les informations (206, 207) sur l'agencement du gabarit (120) comprennent des informations (206, 207) sur l'agencement du gabarit (120) pour restreindre une position de l'élément (131, 132) dans la direction prédéterminée ; un angle d'inclinaison de l'élément (131, 132) par rapport à la surface principale (111a) ; et un angle de rotation de l'élément (131, 132) par rapport à un axe orthogonal à la surface principale (111a) ; et
dans lequel le gabarit (120) comprend un premier gabarit (121) ayant une première surface (121a) et un deuxième gabarit (122) ayant une deuxième surface (122a) faisant face à la première surface (121a), et les informations (206, 207) sur l'agencement du gabarit (120) comprennent des informations (206, 207) sur l'agencement du premier et du deuxième gabarit (121, 122) dont la première surface (121a) et la deuxième surface (122a) sont en butée contre l'élément (131).

2. Système d'affichage vidéo (100) selon la revendication 1, comprenant en outre une unité de détection d'agencement d'affichage (155) configurée pour détecter un agencement d'un affichage qui effectue un affichage sur la base du processus d'affichage,
dans lequel l'unité de commande (107) modifie un agencement d'affichage de la structure (110) et un agencement d'affichage d'informations (206, 207) indiquant l'agencement du gabarit (120) sur l'affichage en fonction de l'agencement de l'affichage détecté par l'unité de détection d'agencement d'affichage (155).

3. Système d'affichage vidéo (100) selon la revendication 1 ou 2, comprenant en outre une unité de détection d'agencement de gabarit (156) configurée pour détecter l'agencement du gabarit (120) agencé dans l'espace réel,
dans lequel l'unité de commande (107) affiche des informations (206, 207) indiquant un déplacement de position du gabarit (120) sur la base de l'agencement du gabarit (120) détecté par l'unité de détection d'agencement de gabarit (156) et des informations (206, 207) sur l'agencement du gabarit (120) stockées dans l'unité de stockage (105).

4. Système d'affichage vidéo (100) selon la revendication 1 ou 2, comprenant en outre une unité de détection d'opération (106) configurée pour détecter l'opération d'un utilisateur,
dans lequel l'unité de commande (107) effectue un processus d'affichage d'informations (206, 207) indiquant l'agencement du gabarit (120) par rapport à un élément (131, 132) correspondant à l'opération de l'utilisateur parmi une pluralité des éléments sur la base d'un résultat de détection obtenu par l'unité de détection d'opération (106) et des informations (206, 207) sur l'agencement du gabarit (120) stockées dans l'unité de stockage (105).

5. Système d'affichage vidéo (100) selon la revendication 4, dans lequel l'unité de stockage (105) stocke des informations (206, 207) sur l'agencement de la pluralité d'éléments sur la structure (110), et
l'unité de commande (107) donne une instruction d'affichage d'informations (206, 207) indiquant l'agencement de la pluralité d'éléments sur la base des informations (206, 207) sur l'agencement de la pluralité d'éléments stockées dans l'unité de stockage (105),
détermine un élément (131, 132) correspondant au résultat de détection obtenu par l'unité de détection d'opération (106) parmi la pluralité d'éléments, et
effectue un processus d'affichage indiquant l'agencement du gabarit (120) par rapport à l'élément déterminé.

6. Système d'affichage vidéo (100) selon l'une quelconque des revendications 1 à 5, comprenant en outre une unité de détection de position d'utilisateur (153) configurée pour détecter une position d'un utilisateur,
dans lequel l'unité de commande (107) effectue un processus d'affichage d'informations (206, 207) indiquant l'agencement du gabarit (120) par rapport à un élément (131, 132) correspondant à la position de l'utilisateur parmi une pluralité des éléments sur la base d'un résultat de détection obtenu par l'unité de détection de position d'utilisateur (153) et des informations (206, 207) sur l'agencement du gabarit (120) stockées dans l'unité de stockage (105).

7. Système d'affichage vidéo (100) selon l'une quelconque des revendications 1 à 6, comprenant en outre une unité de détection de direction de ligne visuelle (154) configurée pour détecter une direction de ligne visuelle d'un utilisateur,
dans lequel l'unité de commande (107) effectue un processus d'affichage d'informations (206, 207) indiquant l'agencement du gabarit (120) par rapport à un élément (131, 132) correspondant à la direction de ligne visuelle de l'utilisateur parmi une pluralité des éléments sur la base d'un résultat de détection obtenu par l'unité de détection de direction de ligne visuelle (154) et des informations (206, 207) sur l'agencement du gabarit (120) stockées dans l'unité de stockage (105).
